# EUROPÄISCHE PATENTSCHRIFT

(11) **EP 1 164 764 B1**
(45) Veröffentlichungstag und Bekanntmachung des Hinweises auf die Patenterteilung: **21.12.2005**
(21) Anmeldenummer: 01112494.8
(22) Anmeldetag: 22.05.2001
(51) Int. Cl.: H04L 29/06, H04L 29/12

(54) **Verfahren für eine Umwandlung einer Netzwerkadresse**
Method for network address conversion
Methode pour la conversion d ' une adresse de réseau

(30) Priorität: 16.06.2000 DE 10029792
(43) Veröffentlichungstag der Anmeldung: 19.12.2001
(73) Patentinhaber: SIEMENS AKTIENGESELLSCHAFT, 80333 München (DE)
(72) Erfinder: Lindemann, Werner, Dr., 45473 Mühlheim (DE); Schönfeld, Norbert, 44145 Dortmund (DE); Wulf, Frank, 41468 Neuss (DE)

(56) Entgegenhaltungen:
- WO-A-99/21340
- JP-A- 1 112 577
- US-A- 6 006 258
- EGEVANG K ET AL: "RFC1631: The IP Network Address Translator (NAT)" REQUEST FOR COMMENTS, [Online] Mai 1994 (1994-05), XP002246214 Gefunden im Internet: <URL:http://www.ietf.org/rfcs/rfc1631.txt> [gefunden am 2003-07-02]
- EUN-SANG LEE ET AL: "An expanded NAT with server connection ability" TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, 15. September 1999 (1999-09-15), Seiten 1391-1394, XP010368539 ISBN: 0-7803-5739-6

## Beschreibung

Aus der Produktschrift "Sonderausgabe telcom report und Siemens Magazin Com: ISDN im Büro - HICOM", Siemens AG, Berlin und München, 1985, insbesondere der Seiten 26 bis 37 ist eine für eine Informationsvermittlung, insbesondere Sprachdatenvermittlung ausgebildete Kommunikationsanlage bekannt. Die Kommunikationsanlage umfaßt einen in der Kommunikationsanlage integrierten Betriebs- und Datenserver, durch den eine Administrierung - Fernverwaltung und Fernwartung - der Kommunikationsanlage ausgehend von einer externen Servicezentrale erfolgt. Ein bidirektionaler Datenaustausch zwischen der Servicezentrale und der Kommunikationsanlage erfolgt dabei beispielsweise über ein öffentliches Kommunikationsnetz mittels entsprechender Modems.

Moderne Kommunikationsanlagen verfügen in der Regel zusätzlich zu den herkömmlichen, sprachdaten-orientierten Anschlußeinheiten über einen Anschluß an ein Rechnernetz, z.B. ein lokales Netzwerk LAN. Der Anschluß an das Rechnernetz wird dabei mittels einer separaten Peripherie-Baugruppe realisiert. Eine Kommunikationsanlage mit einer solchen Rechnernetz-Anschlußbaugruppe ist beispielsweise aus der deutschen Patentanmeldung mit dem amtlichen Kennzeichen 199 465 04.5 bekannt.

Eine Adressierung der an einem Rechnernetz angeschlossenen Einrichtungen - beispielsweise von 'Personal Computern' - bzw. des Rechnernetzes selbst erfolgt dabei üblicherweise über eine der jeweiligen Einrichtung zugeordnete IP-Adresse (Internet Protokoll) bzw. eine dem Rechnernetz zugeordnete Netz-Adresse. Durch die IP-Adresse werden die am Rechnernetz angeschlossenen Einrichtungen bzw. das Rechnernetz selbst eindeutig identifiziert, wobei die IP-Adressen von einem Administrator der Kommunikationsanlage individuell vergeben werden können. Im Zusammenhang mit einem derartigen Rechnernetz wird in der Literatur bei bestimmten - durch die RFC (Request For Comments) festgelegten - IP-Adressen häufig von einem privaten Adreßraum gesprochen.

Durch die individuelle Vergabe von IP-Adressen durch den Administrator einer Kommunikationsanlage ergibt sich das Problem, daß an unterschiedlichen Kommunikationsanlagen angeschlossene Rechnernetze bzw. den mit dem Rechnernetz verbundenen Einrichtungen die gleichen IP-Adressen zugewiesen werden und die IP-Adressen somit von außerhalb der Kommunikationsanlage nicht mehr eindeutig einer Einrichtung bzw. einem Rechnernetz zuordenbar sind. Für eine Administrierung eines Rechnernetzes bzw. einer an das Rechnernetz angeschlossenen Einrichtung ausgehend von der Servicezentrale ist es aus diesem Grund notwendig, daß eine den Verbindungsaufbau steuernde Einrichtung der Servicezentrale - in der Literatur häufig als 'Router' bezeichnet - vor einem jeweiligen Verbindungsaufbau manuell entsprechend umkonfiguriert wird, so daß eine Verbindung mit der entsprechenden zu administrierenden Einrichtung aufgebaut wird. Bei einer Vielzahl von zu administrierenden Einrichtungen ist dies jedoch mit einem erheblichen Aufwand verbunden.

Die Druckschrift US 6,006,258 - Kalajan "Source Address directed message delivery" zeigt ein Verfahren für die Umwandlung einer Netzwerkadresse in einem paketvermittelten Netzwerk (IP-Netz). Datenpakete, die an einer externen Datenverarbeitungseinrichtung zu einer Einrichtung in einem lokalen Netzwerk gesendet werden, weisen als Ziel-Netzwerk-Adresse die Netzwerkadresse einer zentralen Einrichtung (Router) des lokalen Netzwerks (Zielnetzwerk) auf und tragen als Absender-adresse die Netzwerkadresse der externen Datenverarbeitungseinrichtung. Mittels einer in der zentralen Einrichtung (Router) zu hinterlegenden Tabelle werden die von der zentralen Einrichtung empfangenen Datenpakete neu adressiert mit der internen Netzwerkadresse des Zielnetzwerkelemente, wobei in der-Tabelle jeder Absender-Adresse genau eine Ziel-Netzwerkadresse zugeordnet ist.

Auch die Druckschrift WO99/21340 Maria et al. "A Method And Apparatus For Filtering Packets Using A Dedicated Procesaor" zeigt ein verfahren und eine Einrichtung zur Umsetzung von Ziel-Netzwerkadressen in Datenpaketen. Anhand der Absender-Netzwerkadresse der ein Datenpaket absendenden Datenverarbeitungseinrichtung wird aus einer zu hinterlegenden Datenbank (Tabelle) genau eine zugeordnete neue Ziel-Netzwerkadresse ermittelt und in dem jeweiligen Datenpaket gegen die ursprüngliche Ziel-Netzwerkadresse ausgetauscht.

Schließlich zeigt die Druckschrift US 6,173,334 Matsuzaki et al. "Network Sytem Including A Plurality of LAN Systems and an Intermediate Network Having Independent Address Schemes" die Übertragung von IP-Datenpaketen zwischen zwei lokalen Netzwerken unter Nutzung eines zwischengeschalteten Netzwerkes. Dabei werden die in den Datenpaketen genutzten Netzwerkadressen in jedem beteiligten Netzwerk mittels Tabellen umgesetzt, wobei durch die jeweilige IP-Subnetzmaske des Sende-Netzwerks der Netzwerk-Anteil der Zieladresse bestimmt wird und anhand dieses Netzwerk-Anteils entschieden wird, welche Datenpakete an welches benachbarte Netzwerk zu übertragen sind. Dabei werden die Absender- und die Ziel-Netzwerkadressen in jedem beteiligen Netzwerk jeweils mittels der Tabellen umgesetzt.

Der vorliegenden Erfindung liegt die Aufgabe zugrunde, Maßnahmen vorzusehen, durch welche der Aufwand für eine Administrierung reduziert werden oder sogar vollständig entfallen kann.

Die Lösung dieser Aufgabe erfolgt erfindungsgemäß mit den Merkmalen des Patentanspruchs 1.

Ein wesentlicher Vorteil des erfindungsgemäßen Verfahrens besteht darin, daß das erfindungsgemäße Verfahren auf einfache Weise in bereits bestehende Systeme integriert werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Zuweisung von virtuellen Netzadressen und eine Umwandlung der im Rahmen einer Verbindung verwendeten Netzwerkadressen in einer den zu administrierenden Einrichtungen zugeordneten zentralen Einrichtung eine manuelle Umkonfigurierung der Router-Einrichtung der Servicezentrale entfallen kann.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten gemäß eines ersten Ausführungsbeispiels;
- Fig. 2:: ein Strukturbild zur schematischen Darstellung der am erfindungsgemäßen Verfahren beteiligten wesentlichen Funktionseinheiten gemäß eines zweiten Ausführungsbeispiels
- Fig. 3:: ein Ablaufdiagramm zur Veranschaulichung der bei einer Nachrichtenübermittlung von einer der Servicezentrale zugeordneten Datenverarbeitungseinrichtung an eine zu administrierende Einrichtung ablaufenden wesentlichen Verfahrensschritte; und
- Fig. 4:: ein Ablaufdiagramm zur Veranschaulichung der bei einer Nachrichtenübermittlung von der zu administrierende Einrichtung an die der Servicezentrale zugeordnete Datenverarbeitungseinrichtung ablaufenden wesentlichen Verfahrensschritte.

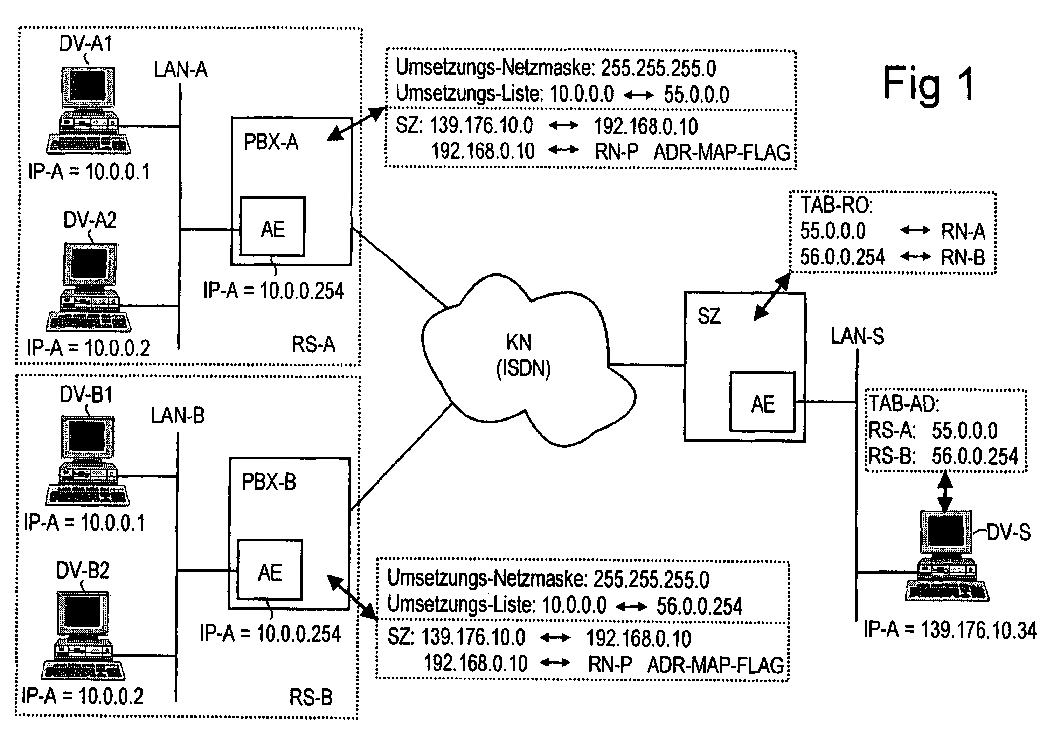

Fig. 1 zeigt ein Strukturbild zur schematischen Darstellung der am erfindungsgemäßen Verfahren beteiligten wesentlichen Funktionseinheiten gemäß eines ersten Ausführungsbeispiels der Erfindung. Hierbei sind eine Servicezentrale SZ, eine erste Kommunikationsanlage PBX-A und eine zweite Kommunikationsanlage PBX-B über ein Kommunikationsnetz KN, beispielsweise ein ISDN-orientiertes Kommunikationsnetz (durch das in Klammern gesetzte ISDN angedeutet) miteinander verbunden. An die Servicezentrale SZ ist über eine Anschlußeinheit AE ein Servicenetz LAN-S mit daran angeschlossenen Datenverarbeitungseinrichtungen angeschlossen. Beispielhaft ist eine Datenverarbeitungseinrichtung DV-S - im folgenden als Servicerechner DV-S bezeichnet - mit einer zugeordneten. IP-Adresse IP-A = 139.176.10.34 dargestellt.

Des weiteren ist an die erste Kommunikationsanlage PBX-A ein erstes Rechnernetz LAN-A und an die zweite Kommunikationsanlage PBX-B ein zweites Rechnernetz LAN-B mit daran angeschlossenen Datenverarbeitungseinrichtungen angeschlossen. Beispielhaft sind sowohl für das erste Rechnernetz LAN-A eine erste und eine zweite Datenverarbeitungseinrichtung DV-A1, DV-A2 als auch für das zweite Rechnernetz LAN-B eine erste und eine zweite Datenverarbeitungseinrichtung DV-B1, DV-B2 dargestellt. Die ausgehend von der Servicezentrale SZ zu administrierende Anordnung bestehend aus der ersten Kommunikationsanlage PBX-A, dem ersten Rechnernetz LAN-A und den daran angeschlossenen Datenverarbeitungseinrichtungen DV-A1, DV-A2 wird im folgenden als erstes Remotesystem RS-A bezeichnet. Die Anordnung bestehend aus der zweiten Kommunikationsanlage PBX-B, dem zweiten Rechnernetz LAN-B und den daran angeschlossenen Datenverarbeitungseinrichtungen DV-B1, DV-B2 wird im folgenden als zweites Remotesystem RS-B bezeichnet.

Sowohl dem ersten als auch dem zweiten Rechnernetz LAN-A, LAN-B sind im jeweiligen Remotesystem RS-A, RS-B die gleichen Netzwerkadressen IP-A = 10.0.0.x zugeordnet. Hierbei ist der den Anschluß des Rechnernetzes LAN-A, LAN-B an die jeweilige Kommunikationsanlage PBX-A, PBX-B realisierenden Anschlußeinheit AE - gemäß der üblicherweise verwendeten Konventionen - jeweils die IP-Adresse 10.0.0.254 zugeordnet. Der ersten und der zweiten Datenverarbeitungseinrichtung DV-A1, DV-A2, DV-B1, DV-B2 des jeweiligen Rechnernetzes LAN-A, LAN-B sind jeweils die IP-Adresse IP-A = 10.0.0.1 bzw. IP-A = 10.0.0.2 zugeordnet.

Für eine eindeutige Adressierung des ersten und des zweiten Rechnernetzes LAN-A, LAN-B ausgehend von der Servicezentrale SZ ist dem ersten Rechnernetz LAN-A in der Servicezentrale die virtuelle IP-Adresse IP-A = 55.0.0.0 und dem zweiten Rechnernetz LAN-B die virtuelle IP-Adresse IP-A = 56.0.0.254 zugeordnet. Zusätzlich ist in dem am Servicenetz LAN-S angeschlossenen Servicerechner DV-S eine Tabelle TAB-AD hinterlegt, in der die durch das Servicezentrum SZ zu administrierenden Einrichtungen aufgelistet sind. Beispielhaft ist ein Eintrag für das erste Remotesystem RS-A und ein Eintrag für das zweite Remotesystem RS-B dargestellt. Für eine Administrierung des ersten Remotesystems RS-A ist die IP-Adresse IP-A = 55.0.0.0 und für die Administrierung des zweiten Remotesystems RS-B die IP-Adresse IP-A = 56.0.0.254 hinterlegt.

In Kombination mit einer - nicht dargestellten - Netzmaske 255.255.255.0 ist durch die Hinterlegung der dem ersten Remotesystem RS-A zugeordneten IP-Adresse IP-A = 55.0.0.0 festgelegt, daß das gesamte erste Rechnernetz LAN-A für eine Administrierung durch die Servicezentrale SZ vorgesehen ist. Durch die Hinterlegung der dem zweiten Remotesystem RS-B zugeordneten IP-Adresse IP-A = 56.0.0.254 ist dagegen festgelegt, daß nur die den Anschluß des zweiten Rechnernetzes LAN-B an die zweite Kommunikationsanlage PBX-B realisierende Anschlußeinheit AE für eine Administrierung durch die Servicezentrale SZ vorgesehen ist.

Des weiteren ist für einen Verbindungsaufbau zwischen der Servicezentrale SZ und der ersten bzw. zweiten Kommunikationsanlage PBX-A, PBX-B in der Servicezentrale eine sogenannte Routing-Tabelle TAB-RO gespeichert, welche den virtuellen Adressen IP-A = 55.0.0.0, IP-A = 56.0.0.254 des ersten bzw. zweiten Remotesystems RS-A, RS-B zugeordnete Rufnummern RN-A, RN-B für einen Verbindungsaufbau mit der jeweiligen dem Remotesystem RS-A, RS-B zugeordneten Kommunikationsanlage PBX-A, PBX-B über das Kommunikationsnetz KN umfaßt.

Für eine Umwandlung der Adressen im jeweiligen Remotesystem RS-A, RS-B ist sowohl in der ersten Kommunikationsanlage PBX-A als auch in der zweiten Kommunikationsanlage PBX-B eine Umsetzungs-Liste und eine Umsetzungs-Netzmaske gespeichert. In der Umsetzungs-Liste wird eine im Rahmen einer zu erfolgenden Adreßumwandlung festgelegte Zuordnung zwischen kommunikationsanlagen-interner Netzwerkadresse und virtueller Netzwerkadresse gespeichert. In Übereinstimmung mit der Servicezentrale SZ ist im ersten Remotesystem RS-A für das erste Rechnernetz LAN-A der kommunikationsanlagen-internen Netzwerkadresse IP-A = 10.0.0.0 die virtuelle Netzwerkadresse IP-A = 55.0.0.0 zugeordnet gespeichert. Im zweiten Remotesystem RS-B ist für das zweite Rechnernetz LAN-B der kommunikationsanlagen-internen Netzwerkadresse IP-A = 10.0.0.0 die virtuelle Netzwerkadresse IP-A = 56.0.0.254 zugeordnet gespeichert.

Durch eine Netzmaske wird allgemein festgelegt, welche der 4 Byte einer - gemäß der Version IPv4 ausgebildeten - IP-Adresse IP-A das Rechnernetz LAN-A, LAN-B - in der Literatur häufig als Netz-Anteil bezeichnet - und welche die, an das Rechnernetz LAN-A, LAN-B angeschlossenen Einrichtungen DV-A, DV-B bzw. die den Anschluß des Rechnernetzes LAN-A, LAN-B an die jeweilige Kommunikationsanlage PBX-A, PBX-B realisierende Anschlußeinheit AE - in der Literatur häufig als Host-Anteil bezeichnet -identifizieren. Beispielhaft ist eine Umsetzung-Netzmaske 255.255.255.0 dargestellt, durch die festgelegt ist, daß die ersten 3 Byte einer IP-Adresse IP-A - Netz-Anteil - das jeweilige Rechnernetz LAN-A, LAN-B, und daß das vierte Byte einer IP-Adresse IP-A - Host-Anteil - eine am jeweiligen Rechnernetz LAN-A, LAN-B angeschlossene Einrichtung DV-A, DV-B, AE identifiziert. Da den Bytewertigkeiten 0 und 255 - wie anhand der dargestellten Umsetzungs-Netzmaske 255.255.255.0 aufgezeigt - jeweils eine Sonderbedeutung zugewiesen ist, lassen sich mittels der vorliegenden Netzmaske 255.255.255.0 - durch die IP-Adressen IP-A = 10.0.0.1 bis IP-A = 10.0.0.254 - folglich maximal 254 an einem Rechnernetz LAN-A, LAN-B angeschlossene Einrichtungen adressieren.

Beim vorliegenden Ausführungsbeispiel wird das erste und das zweite Rechnernetz LAN-A, LAN-B jeweils durch die ersten 3 Byte einer jeweiligen IP-Adresse IP-A, d.h. mittels der Adressen 10.0.0.x (x = 0,...,255) identifiziert. Die Anschlußeinheiten sind - entsprechend der üblicherweise verwendeten Konventionen - durch das vierte Byte der entsprechenden IP-Adresse IP-A = 10.0.0.254, die ersten Datenverarbeitungseinrichtung DV-A1, DV-B1 durch das vierte Byte IP-A = 10.0.0.1 und die zweiten Datenverarbeitungseinrichtung DV-A2, DV-B2 durch das vierte Byte IP-A = 10.0.0.2 eindeutig identifiziert.

Alternativ besteht die Möglichkeit durch eine Netzmaske 255.255.0.0 für eine Adressierung der an einem Rechnernetz LAN-A, LAN-B angeschlossenen Einrichtungen DV-A, DV-B, AE zwei (oder sogar mehr) Bytes einer IP-Adresse IP-A zu reservieren. Dies ist der Fall, wenn mehr als 254 Einrichtungen an einem Rechnernetz LAN-A, LAN-B angeschlossen werden sollen. Des weiteren können durch eine Netzmaske 255.255.255.128 auch nur Teile des vierten Bytes - beispielsweise nur die letzten 7 Bit - einer IP-Adresse IP-A für die Adressierung der an einem Rechnernetz LAN-A, LAN-B angeschlossenen Einrichtungen DV-A, DV-B, AE reserviert werden. Dies ist beispielsweise bei einer Bildung von sogenannten Subnetzen sinnvoll, wenn beispielsweise maximal 128 Einrichtungen an einem Rechnernetz LAN-A, LAN-B anzuschließen sind.

Des weiteren sind sowohl in der ersten Kommunikationsanlage PBX-A als auch in der zweiten Kommunikationsanlage PBX-B Routing-Einträge für einen bidirektionalen Datenaustausch zwischen dem jeweiligen Remotesystem RS-A, RS-B und der Servicezentrale SZ über das Kommunikationsnetz KN hinterlegt. Hierbei ist der für einen Aufbau mit dem Servicenetz LAN-S hinterlegten Netzwerkadresse IP-A = 139.176.10.0 eine weitere Netzwerkadresse IP-A = 192.168.0.10 zugeordnet gespeichert. Durch diese weitere Netzwerkadresse IP-A = 192.168.0.10 wird beispielsweise ein - nicht dargestellter - Netzknoten des Kommunikationsnetzes KN eindeutig identifiziert, an den eine Nachricht ausgehend von einer der Kommunikationsanlagen PBX-A, PBX-B übermittelt und von dem aus die Nachricht eigenständig an die Servicezentrale SZ weitergeleitet wird. Ein derartiger Netzknoten wird im folgenden als ISDN-Partner bezeichnet. Für einen Verbindungsaufbau ausgehend von der jeweiligen Kommunikationsanlage PBX-A, PBX-B mit dem ISDN-Partner - bzw. des Netzknotens des Kommunikationsnetzes KN - ist zusätzlich zu der dem ISDN-Partner zugeordneten weiteren Netzwerkadresse IP-A = 192.168.0.10 eine dem ISDN-Partner im Kommunikationsnetz KN zugeordnete Partner-Rufnummer RN-P gespeichert. Gemäß des ersten Ausführungsbeispiels der Erfindung sind die für eine Adreßumwandlung vorgesehenen Netzwerkadressen IP-A = 192.168.0.10 mit einer entsprechenden Umwandlungs-Identifizierung ADR-MAP-FLAG gekennzeichnet.

Ist in der jeweiligen Kommunikationsanlage PBX-A, PBX-B die Rufnummer RN-S der Servicezentrale SZ unmittelbar verfügbar kann die Umwandlungs-Identifizierung ADR-MAP-FLAG direkt der Netzwerkadresse IP-A = 139.176.10.0 der Servicezentrale SZ zugeordnet werden.

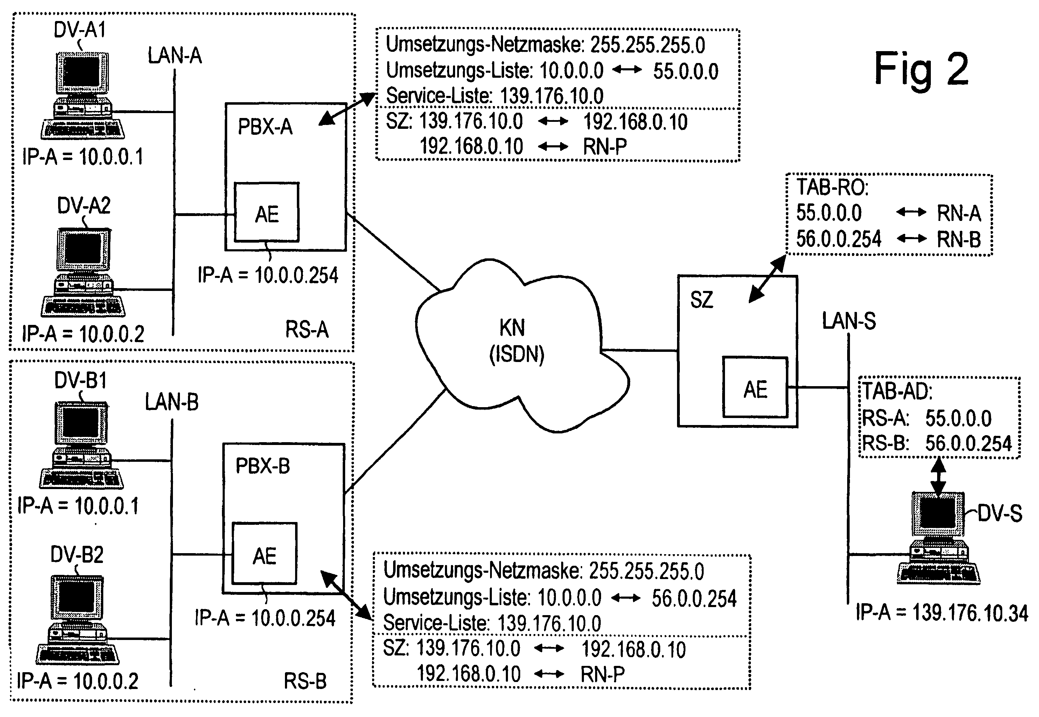

Fig. 2 zeigt ein Strukturbild zur schematischen Darstellung der am erfindungsgemäßen Verfahren beteiligten wesentlichen Funktionseinheiten gemäß eines zweiten Ausführungsbeispiels der Erfindung. Das zweite Ausführungsbeispiel der Erfindung unterscheidet sich vom ersten Ausführungsbeispiel lediglich dahingehen, daß eine Entscheidung, ob eine Adreßumwandlung durchzuführen ist nicht anhand des für einen Verbindungsaufbau zwischen der Servicezentrale SZ und der jeweiligen Kommunikationsanlage PBX-A, PBX-B gewählten Leitwegs, d.h. nicht über einen an der Verbindung beteiligten ISDN-Partner erfolgt. Im Gegensatz zum ersten Ausführungsbeispiel ist beim zweiten Ausführungsbeispiel in den Kommunikationsanlagen PBX-A, PBX-B jeweils eine Service-Liste mit den für eine Adreßumwandlung vorgesehenen Absender-Netzwerkadressen hinterlegt. Beispielhaft ist eine Service-Liste mit einem Eintrag für das Servicenetz LAN-S mit der Netzwerkadresse IP-A = 139.176.10.0 dargestellt. Die Verwendung einer Umwandlungs-Identifizierung ADR-MAP-FLAG kann somit bei diesem Ausführungsbeispiel entfallen. Mittels der Serviceliste wird ein gezieltes Auswählen oder Ausschließen von am Servicenetz LAN-S angeschlossenen Servicerechnern DV-S für eine Administration eines jeweiligen Remotesystems RS-A, RS-B auf einfache Weise ermöglicht.

Im nachfolgenden wird die erfindungsgemäße Adreßumwandlung am Beispiel des ersten Remotesystems RS-A unter Bezugnahme auf die Figuren 1 und 2 näher veranschaulicht.

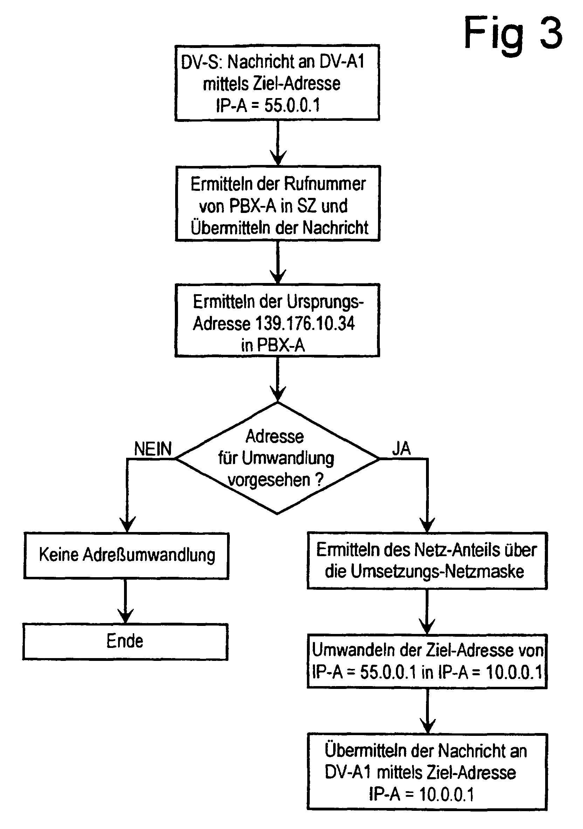

Fig. 3 zeigt ein Ablaufdiagramm zur Veranschaulichung der bei der Übertragung einer - beispielsweise im Rahmen einer Administrierung zu übermittelnden - Nachricht vom Servicerechner DV-S an die erste Datenverarbeitungseinrichtung DV-A1 des ersten Remotesystems RS-A ablaufenden wesentlichen Verfahrensschritte. Für die Übermittlung einer Nachricht an das erste Remotesystem RS-A wird aus der im Servicerechner DV-S gespeicherten Tabelle TAB-AD die virtuelle IP-Adresse IP-A = 55.0.0.0 des ersten Rechnernetzes LAN-A ermittelt. Nachfolgend wird mittels der die erste Datenverarbeitungseinrichtung DV-A1 des ersten Remotesystems RS-A identifizierenden IP-Adresse IP-A = 55.0.0.1 - im weiteren als virtuelle Ziel-Adresse bezeichnet - eine Nachricht an das erste Remotesystem RS-A übermittelt. In der Servicezentrale SZ wird mittels der dort hinterlegten Routing-Tabelle TAB-RO die der virtuellen IP-Adresse IP-A = 55.0.0.0 zugeordnete Rufnummer RN-A ermittelt und mittels dieser Rufnummer RN-A eine Verbindung mit der ersten Kommunikationsanlage PBX-A über das Kommunikationsnetz KN aufgebaut.

In der ersten Kommunikationsanlage PBX-A wird daraufhin eine Identifizierungs- und Authentifizierungsprozedur gestartet. Ein Zugriff auf kommunikationsanlagen-interne Daten und Dienste wird dabei erst nach einer erfolgreichen Identifizierung und Authentifizierung des Servicerechners DV-S oder der Servicezentrale SZ bzw. des den Servicerechner DV-S nutzenden Teilnehmers an der ersten Kommunikationsanlage PBX-A freigegeben. Eine Identifizierung des Servicerechners DV-S kann dabei beispielsweise über die dem Servicerechner DV-S im Servicenetz LAN-S zugeordnete IP-Adresse IP-A = 139.176.10.34 erfolgen. Eine Authentifizierung kann beispielsweise durch die Übermittlung eines Paßwortes durch den den Servicerechner DV-S nutzenden Teilnehmer realisiert werden.

Nach einer erfolgreichen Identifizierung und Authentifizierung des Servicerechners DV-S oder der Servicezentrale SZ bzw. des den Servicerechner DV-S nutzenden Teilnehmers an der ersten Kommunikationsanlage PBX-A wird in der ersten Kommunikationsanlage PBX-A die Ursprungs-Adresse IP-A = 139.176.10.34 (entspricht der IP-Adresse des Servicerechners DV-S) ermittelt und nachfolgend überprüft, ob die empfangene Ursprungs-Adresse IP-A = 139.176.10.34 bzw. das durch die empfangene Ursprungsadresse IP-A = 139.176.10.34 identifizierte Servicenetz LAN-S für eine Adreßumwandlung vorgesehen ist.

Gemäß des ersten Ausführungsbeispiels der Erfindung erfolgt die Überprüfung, ob eine Adreßumwandlung durchzuführen ist, anhand des Leitweges über den eine Verbindung zwischen der Servicezentrale SZ und der ersten Kommunikationsanlage PBX-A aufgebaut, d.h. über welchen ISDN-Partner die Verbindung aufgebaut wurde. Anhand der unter Bezugnahme auf Fig. 1 beschrieben Routing-Einträge in der ersten Kommunikationsanlage PBX-A wird mittels der Ursprungs-Adresse IP-A = 139.176.10.34 ermittelt, daß die Verbindung über den ISDN-Partner mit der Netzwerkadresse IP-A = 192.168.0.10 aufgebaut wurde. In einem nächsten Schritt wird überprüft, ob für diesen ISDN-Partner die Umwandlungs-Identifizierung ADR-MAP-FLAG gesetzt ist.

Gemäß des zweiten Ausführungsbeispiels der Erfindung erfolgt die Überprüfung, ob eine Adreßumwandlung durchzuführen ist, anhand einer Serviceliste unter der die für eine Adreßumwandlung vorgesehenen Ursprungs-Adressen gespeichert sind.

Ist die Ursprungs-Adresse nicht für eine Adreßumwandlung vorgesehen, d.h. ist für einen ermittelten ISDN-Partner keine Umwandlungs-Identifizierung ADR-MAP-FLAG gesetzt (Ausführungsbeispiel 1) bzw. ist die Ursprungs-Adresse nicht in der Serviceliste eingetragen (Ausführungsbeispiel 2), wird das Verfahren beendet.

Ist die Ursprungs-Adresse dagegen - wie in den beiden Ausführungsbeispielen ausgeführt - für eine Adreßumwandlung vorgesehen wird anhand der Umsetzungs-Netzmaske 255.255.255.0 der Netz- und der Host-Anteil der umzuwandelnden, virtuellen Ziel-Adresse IP-A = 55.0.0.1 ermittelt. In einem nächsten Schritt wird der Netz-Anteil der virtuellen Ziel-Adresse IP-A = 55.0.0.x durch den Netz-Anteil der kommunikationsanlagen-internen Ziel-Adresse IP-A = 10.0.0.x ersetzt, so daß sich eine kommunikationsanlagen-interne Zieladresse IP-A = 10.0.0.1 ergibt. Abschließend wird die Nachricht durch die erste Kommunikationsanlage PBX-A mittels der umgewandelten Zieladresse IP-A = 10.0.0.1 an die erste Datenverarbeitungseinrichtung DV-A1 des ersten Remotesystems RS-A übermittelt.

Im Fall des zweiten Remotesystems RS-B erfolgt zusätzlich zur Adreßumwandlung des Netz-Anteils eine Überprüfung des Host-Anteils. Wird beispielsweise durch den Servicerechner DV-S mittels der IP-Adresse IP-A = 56.0.0.1 die erste Datenverarbeitungseinrichtung DV-B1 des zweiten Remotesystems RS-B adressiert, findet in der zweiten Kommunikationsanlage PBX-B zusätzlich zur Adreßumwandlung des Netz-Anteils von IP-A = 55.0.0.1 in IP-A = 10.0.0.1 eine Umwandlung des Host-Anteils von IP-A = 10.0.0.1 in IP-A = 10.0.0.254 statt, so daß nur die für eine Administrierung vorgesehene Anschlußeinheit AE adressierbar ist.

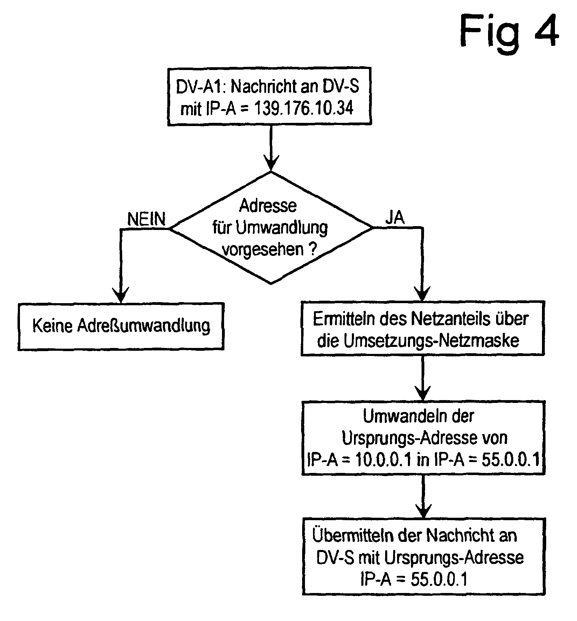

Fig. 4 zeigt ein Ablaufdiagramm zur Veranschaulichung der bei der Übertragung einer - beispielsweise im Rahmen einer Administrierung zu übermittelnden - Antwort von der ersten Datenverarbeitungseinrichtung DV-A1 des ersten Remotesystems RS-A an den Servicerechner DV-S ablaufenden wesentlichen Verfahrensschritte. Der Servicerechner DV-S wird dabei mittels der im Rahmen der Nachricht übermittelten, den Servicerechner DV-S identifizierenden Ziel-Adresse IP-A = 139.176.10.34 adressiert. In einem nächsten Schritt wird überprüft, ob für diese Ziel-Adresse IP-A = 139.176.10.34 in der ersten Kommunikationsanlage PBX-A eine Adreßumwandlung durchzuführen ist.

Gemäß des ersten Ausführungsbeispiels der Erfindung erfolgt die Überprüfung, ob eine Adreßumwandlung durchzuführen ist, anhand des Leitweges über den eine Verbindung zwischen der ersten Kommunikationsanlage PBX-A und der Servicezentrale SZ aufzubauen ist, d.h. über welchen ISDN-Partner die Verbindung aufzubauen ist. Anhand der unter Bezugnahme auf Fig. 1 beschrieben Routing-Einträge in der ersten Kommunikationsanlage PBX-A wird mittels der Ziel-Adresse IP-A = 139.176.10.34 ermittelt, daß die Verbindung über den ISDN-Partner mit der Netzwerkadresse IP-A = 192.168.0.10 aufzubauen ist. In einem nächsten Schritt wird überprüft, ob für den durch die IP-Adresse IP-A = 192.168.0.10 identifizierten ISDN-Partner die Umwandlungs-Identifizierung ADR-MAP-FLAG gesetzt ist.

Gemäß des zweiten Ausführungsbeispiels der Erfindung erfolgt die Überprüfung, ob eine Adreßumwandlung durchzuführen ist, anhand der Serviceliste unter der die für eine Adreßumwandlung vorgesehenen Netzwerkadressen gespeichert sind.

Ist die Ziel-Adresse IP-A = 192.168.0.10 nicht für eine Adreßumwandlung vorgesehen, d.h. ist für einen ermittelten ISDN-Partner keine Umwandlungs-Identifizierung ADR-MAP-FLAG gesetzt (Ausführungsbeispiel 1) bzw. ist die Ursprungs-Adresse nicht in der Serviceliste eingetragen (Ausführungsbeispiel 2), wird die Anwort mit der Ursprungsadresse IP-A = 10.0.0.1 an den Servicerechner DV-S übermittelt.

Ist die Ziel-Adresse IP-A = 192.168.0.10 dagegen - wie in den beiden Ausführungsbeispielen ausgeführt - für eine Adreßumwandlung vorgesehen wird anhand der Umwandlungs-Netzmaske 255.255.255.0 der Netz- und der Host-Anteil der umzuwandelnden, kommunikationsanlagen-internen Ursprungs-Adresse IP-A = 10.0.0.1 ermittelt. In einem nächsten Schritt wird der Netz-Anteil der kommunikationsanlagen-internen IP-Adresse IP-A = 10.0.0.1 durch den Netz-Anteil der virtuellen IP-Adresse IP-A = 55.0.0.x ersetzt, so daß sich eine virtuelle Ursprungs-Adresse IP-A = 55.0.0.1 ergibt. In Fällen, in denen die Verbindung zwischen der ersten Kommunikationsanlage PBX-A und der Servicezentrale SZ nicht mehr besteht, wird mittels der in der ersten Kommunikationsanlage PBX-A gespeicherten Routing-Einträge - insbesondere der Partner-Rufnummer RN-P - eine Verbindung mit der Servicezentrale SZ über das Kommunikationsnetz KN aufgebaut und die Anwort zusammen mit der umgewandelten Ursprungs-Adresse IP-A = 155.0.0.1 an den Servicerechner DV-S übermittelt.

## Patentansprüche

1. Verfahren für eine Umwandlung einer Netzwerkadresse (IP-A),
bei dem bei einem Empfang einer Nachricht in einer Kommunikationseinrichtung (PBX-A) eine Absender-Netzwerkadresse (IP-A = 139.176.10.34) dahingehend überprüft wird, ob die Absender-Netzwerkadresse (IP-A = 139.176.10.34) für eine Adreßumwandlung vorgesehen ist, und
bei dem in Fällen, in denen die Absender-Netzwerkadresse (IP-A = 139.176.10.34) für eine Adreßumwandlung vorgesehen ist, eine Ziel-Netzwerkadresse (IP-A = 55.0.0.1)eines empfangenen Datenpakets in eine kommunikationseinrichtungs-interne Netzwerkadresse (IP-A = 10.0.0.1) umgesetzt wird,
**dadurch gekennzeichnet,**
**daß** anhand einer in der Kommunikationseinrichtung (PBX-A) hinterlegten und speziell für die Adressumwandlung genutzten Umwandlungs-Adreßmaske (255.255.255.0) ermittelt wird, welche Teile der Ziel-Netzwerkadresse (IP-A = 55.0.0.1) in die kommunikationseinrichtungs-interne Netzwerkadresse (IP-A = 10.0.0.1) umzusetzen sind.

2. Verfahren nach Anspruch 1,
**dadurch gekennzeichnet,**
**daß** die Netzwerkadresse (IP-A) eine IP-Adresse (Internet Protokoll) ist.

3. Verfahren nach einem der vorhergehenden Ansprüche,
**dadurch gekennzeichnet,**
**daß** für die Überprüfung, ob eine Adreßumwandlung durchzuführen ist, in der Kommunikationseinrichtung (PBX-A) eine Liste mit für die Adreßumwandlung vorgesehenen Netzwerkadressen (IP-A = 139.176.10.0) gespeichert ist.

4. Verfahren nach einem der vorhergehenden Ansprüche,
**dadurch gekennzeichnet,**
**daß** für die Überprüfung, ob eine Adreßumwandlung durchzuführen ist, ermittelt wird, über welchen Leitweg eine Verbindung zur Kommunikationseinrichtung (PBX-A) eingerichtet wurde.

5. Verfahren nach einem der vorhergehenden Ansprüche,
**dadurch gekennzeichnet,**
**daß** die Kommunikationseinrichtung (PBX-A) eine einen Anschluß eines zu administrierenden Rechnernetzes (LAN-A) realisierende Kommunikationsanlage ist und durch die Absender-Netzwerkadresse (IP-A = 139.176.10.34) eine einer Servicezentrale (SZ) zugeordnete Datenverarbeitungseinrichtung (DV-S) identifiziert wird.

6. Verfahren nach Anspruch 5,
**dadurch gekennzeichnet,**
**daß** eine Adressierung des zu administrierenden Rechnernetzes (LAN-A) und der an das Rechnernetz (LAN-A) angeschlossenen zu administrierenden Einrichtungen (DV-A1, DV-A2) ausgehend von der Servicezentrale (SZ) über eine virtuelle, das Rechnernetz (LAN-A) oder die an das Rechnernetz (LAN-A) angeschlossenen Einrichtungen (DV-A1, DV-A2) eindeutig identifizierende Netzwerkadresse (IP-A = 55.0.0.x) erfolgt.

7. Verfahren nach Anspruch 5 oder 6,
**dadurch gekennzeichnet,**
**daß** für eine Übermittlung einer Antwortnachricht von einer dem Rechnernetz (LAN-A) zugeordneten Einrichtung (DV-A1) überprüft wird, ob die Netzwerkadresse (IP-A = 139.176.10.34) der der Servicezentrale (SZ) zugeordneten Datenverarbeitungseinrichtung (DV-S) für eine Adreßumwandlung vorgesehen ist, und
**daß** in Fällen, in denen dies der Fall ist, die Netzwerkadresse (IP-A = 10.0.0.1) der an das Rechnernetz (LAN-A) angeschlossenen Einrichtung (DV-A1) in eine eindeutig identifizierende virtuelle Netzwerkadresse des Servicezentrums (IP-A = 55.0.0.1) umgesetzt wird.

8. Verfahren nach Anspruch 7,
**dadurch gekennzeichnet,**
**daß** anhand der in der Kommunikationseinrichtung (PBX-A) hinterlegten Umwandlungs-Adreßmaske (255.255.255.0) ermittelt wird, welche Teile der Netzwerkadresse (IP-A = 10.0.0.1) der dem Rechnernetz (LAN-A) zugeordneten Einrichtung (DV-A1) in die eindeutig identifizierende virtuelle Netzwerkadresse des Servicezentrums (IP-A = 55.0.0.1) umzusetzen sind.

## Claims

1. Method for conversion of a network address (IP-A),
in which, on receiving a message in a communication device (PBX-A), a sender network address (IP-A = 139.176.10.34) is checked to determine whether the sender network address (IP-A = 139.176.10.34) is intended for address conversion, and
in which, in cases in which the sender network address (IP-A = 139.176.10.34) is intended for address conversion, a received destination network address (IP-A = 55.0.0.1) of a received data packet is converted to a communication-device-internal network address (IP-A = 10.0.0.1),
**characterized**
**in that** a conversion address mask (255.255.255.0), which is stored in a communication device (PBX-A) and is specifically used for the address conversion, is used to determine which parts of the destination network address (IP-A = 55.0.0.1) need to be converted to the communication-device-internal network address (IP-A - 10.0.0.01).

2. Method according to Claim 1,
**characterized**
**in that** the network address (IP-A) is an IP address (Internet Protocol).

3. Method according to one of the preceding claims,
**characterized**
**in that**, for the check as to whether address conversion is to be carried out, a list with network addresses (IP-A = 139.176.10.0) intended for address conversion is stored in the communication device (PBX-A).

4. Method according to one of the preceding claims,
**characterized**
**in that**, for the check as to whether address conversion is to be carried out, a determination is made of the route via which a link to the communication device (PBX-A) has been set up.

5. Method according to one of the preceding claims,
**characterized**
**in that** the communication device (PBX-A) is a communications system providing access to a computer network (LAN-A) to be administered, and the sender network address (IP-A = 139.176.10.34) is used to identify a data processing device (DV-S) associated with a service centre (SZ).

6. Method according to Claim 5,
**characterized**
**in that** addressing of the computer network (LAN-A) to be administered and of the devices (DV-A1, DV-A2) which are connected to the computer network (LAN-A) and are to be administered is carried out from the service centre (SZ) via a virtual network address (IP-A = 55.0.0.x) which uniquely identifies the computer network (LAN-A) or those devices (DV-A1, DV-A2) which are connected to the computer network (LAN-A).

7. Method according to Claim 5 or 6,
**characterized**
**in that**, for transmitting a response message from a device (DV-A1) which is associated with the computer network (LAN-A), a check is carried out to determine whether the network address (IP-A = 139.176.10.34) of the data processing device (DV-S) which is associated with the service centre (SZ) is intended for address conversion,
and
**in that**, in situations in which this is the case, the network address (IP-A = 10.0.0.1) of the device (DV-A1) which is connected to the computer network (LAN-A) is converted to a uniquely identifying virtual network address of the service centre (IP-A = 55.0.0.1).

8. Method according to Claim 7,
**characterized**
**in that** the conversion address mask (255.255.255.0) which is stored in the communication device (PBX-A) is used to determine which parts of the network address (IP-A = 10.0.0.1) of the device (DV-A1) which is associated with the computer network (LAN-A) are to be converted into the uniquely identifying virtual network address of the service centre (IP-A = 55.0.0.1).

## Revendications

1. Procédé de conversion d'une adresse de réseau (IP-A),
dans lequel, lors d'une réception d'un message dans un dispositif de communication (PBX-A), on vérifie une adresse de réseau d'émetteur (IP-A = 139.176.10.34) pour savoir si l'adresse de réseau d'émetteur (IP-A = 139.176.10.34) est prévue pour une conversion d'adresse, et
dans lequel, dans les cas dans lesquels l'adresse de réseau d'émetteur (IP-A = 139.176.10.34) est prévue pour une conversion d'adresse, on convertit une adresse de réseau de destination (IP-A = 55.0.0.1) d'un paquet de données reçu en une adresse de réseau interne au dispositif de communication (IP-A = 10.0.0.1),
**caractérisé par le fait que**, à l'aide d'un masque d'adresse de conversion (255.255.255.0) spécialement utilisé pour la conversion d'adresse et enregistré dans le dispositif de communication (PBX-A), on détermine quelles parties de l'adresse de réseau de destination (IP-A = 50.0.0.1) sont à convertir en l'adresse de réseau interne au dispositif de communication (IP-A = 10.0.0.1).

2. Procédé selon la revendication 1,
**caractérisé par le fait que** l'adresse de réseau (IP-A) est une adresse IP (Internet Protocol).

3. Procédé selon l'une des revendications précédentes,
**caractérisé par le fait que**, pour vérifier si une conversion d'adresse est à effectuer, une liste avec des adresses de réseau (IP-A = 139.176.10.0) prévues pour la conversion d'adresse est mémorisée dans le dispositif de communication (PBX-A).

4. Procédé selon l'une des revendications précédentes,
**caractérisé par le fait que**, pour vérifier si une conversion d'adresse est à effectuer, on détermine par l'intermédiaire de quelle voie d'acheminement une liaison a été établie vers le dispositif de communication (PBX-A).

5. Procédé selon l'une des revendications précédentes,
**caractérisé par le fait que** le dispositif de communication (PBX-A) est une installation de communication réalisant un raccordement d'un réseau informatique (LAN-A) à gérer et que l'adresse de réseau d'émetteur (IP-A = 139.176.10.34) identifie un dispositif de traitement de données (DV-S) associé à un central de services (SZ).

6. Procédé selon la revendication 5,
**caractérisé par le fait qu'**un adressage du réseau informatique (LAN-A) à gérer et des dispositifs (DV-A1, DV-A2) à gérer raccordés au réseau informatique (LAN-A) s'effectue à partir du central de services (SZ) par l'intermédiaire d'une adresse de réseau (IP-A = 55.0.0.x) virtuelle identifiant sans ambiguïté le réseau informatique (LAN-A) ou les dispositifs (DV-A1, DV-A2) raccordés au réseau informatique (LAN-A).

7. Procédé selon la revendication 5 ou 6,
**caractérisé par le fait que**
pour une transmission d'un message de réponse d'un dispositif (DV-A1) associé au réseau informatique (LAN-A), on vérifie si l'adresse de réseau (IP-A = 139.176.10.34) du dispositif de traitement de données (DV-S) associé au central de services (SZ) est prévue pour une conversion d'adresse, et
si c'est le cas, on convertit l'adresse de réseau (IP-A = 10.0.0.1) du dispositif (DV-A1) raccordé au réseau informatique (LAN-A) en une adresse de réseau virtuelle du centre de services (IP-A = 55.0.0.1) l'identifiant sans ambiguïté.

8. Procédé selon la revendication 7,
**caractérisé par le fait que**, à l'aide du masque d'adresse de conversion (255.255.255.0) enregistré dans le dispositif de communication (PBX-A), on détermine quelles parties de l'adresse de réseau (IP-A = 10.0.0.1) du dispositif (DV-A1) associé au réseau informatique (LAN-A) sont à convertir en l'adresse de réseau virtuelle du centre de services (IP-A = 55.0.0.1) l'identifiant sans ambiguïté.
